# EUROPÄISCHE PATENTSCHRIFT

(11) **EP 0 978 417 B1**
(45) Veröffentlichungstag und Bekanntmachung des Hinweises auf die Patenterteilung: **16.03.2005**
(21) Anmeldenummer: 99114980.8
(22) Anmeldetag: 31.07.1999
(51) Int. Cl.: B60Q 1/04

(54) **Vorrichtung zur Positionierung eines Scheinwerfers**
Headlamp positioning device
Dispositif pour positionner un phare

(30) Priorität: 04.08.1998 DE 19835048
(43) Veröffentlichungstag der Anmeldung: 09.02.2000
(73) Patentinhaber: Hella KGaA Hueck & Co., 59552 Lippstadt (DE)
(72) Erfinder: Krukenbaum, Friedrich, 59069 Hamm (DE); Schäfers, Franz, 33106 Paderborn (DE)

(56) Entgegenhaltungen:
- DE-A- 19 632 688
- DE-C- 19 636 029
- FR-A- 2 710 592
- JP-A- 4 113 943
- US-A- 3 814 928
- US-A- 5 230 130
- US-A- 5 453 902

## Beschreibung

Die Erfindung betrifft eine Vorrichtung zur Positionierung eines mit seinem Gehäuse in einer Karosserieöffnung eines Fahrzeuges zu befestigenden Scheinwerfers nach dem Oberbegriff des Patentanspruchs 1.

Die Erfindung betrifft weiterhin ein Verfahren zur Positionierung eines in einer Karosserieöffnung eines Fahrzeuges zu befestigenden Scheinwerfers gegenüber einem Verkleidungsteil, beispielsweise einem Stoßfänger.

Aus der DE 44 42 294 C1 ist eine Vorrichtung zur Positionierung eines Gehäuses einer Fahrzeugleuchte bzw. eines Fahrzeugscheinwerfers bekannt, bei der das Gehäuse über Haltemittel in einem Verkleidungsteil, beispielsweise einem Stoßfänger, positionierbar ist.

Nachteilig dabei ist, dass das Gehäuse von hinten an den Stoßfänger montiert werden muss, um dann mit dem Stoßfänger zusammen an der Karosserie befestigt zu werden.

Aus der EP 0 719 671 B1 ist eine Vorrichtung zur Positionierung einer Scheibe eines Scheinwerfers bekannt. Dazu weist die Scheibe an ihrem Umfang Zapfen auf, die in entsprechende Langlöcher eines die Scheibe umgebenden Karosserieteiles bzw. Verkleidungsteiles eingreifen.

Nachteilig ist dabei, dass die Scheibe zwar gegenüber dem sie umgebenden Verkleidungsteil eine genaue Lage einnimmt, dass aber zum einen eine Justierung gegenüber dem Gehäuse nicht erfolgt und zum anderen die Positionierung relativ kompliziert und aufwändig ist.

Aus der US 5 453 902 ist eine Vorrichtung zur Positionierung eines mit seinem Gehäuse in einer Karosserieöffnung eines Fahrzeuges zu befestigenden Scheinwerfers bekannt, bei dem eine Scheibe und ein Gehäuserand des Scheinwerfers in Umfangsrichtung randseitige abragende Nasen aufweisen, die bei der Montage bündig ineinander greifen.

Aus der US 3 814 928 A ist eine Vorrichtung zur Positionierung einer mit ihrem Gehäuse in einer Karosserieöffnung eines Fahrzeuges zu befestigenden optischen Einheit bekannt, bei der an einer Rückseite des Gehäuses ein konkavförmiges Zentrierelement vorgesehen ist, das mit einer korrespondierenden Ausbuchtung einer Karosserievertiefung zentrierend zusämmenwirkt. Die Befestigung der optischen Einheit erfolgt durch seitliche Rastelemente. Ein derart großflächiges Zentrierelement ist aus Bauraumgründen für Scheinwerfer nicht erwünscht.

Aus der DE 196 36 029 C1 ist eine Vorrichtung zur Positionierung eines mit seinem Gehäuse in einer Karosserieöffnung des Fahrzeuges zu befestigenden Scheinwerfers bekannt, die als Zentrieransatz beabstandet zueinander angeordnete Anschlagrippen am Rand des Scheinwerfergehäuses vorsieht. Diese Anschlagrippen dienen zur Anlage des Gehäuses an einer Innenwandung eines Kotflügels des Fahrzeuges. Zu diesem Zweck befinden sich diese Anschlagrippen an einer seitlichen Schmalseite des Gehäuserandes.

Aufgabe der vorliegenden Erfindung ist es, eine einfache und unkomplizierte Positionierung eines in einer Karosserieöffnung befestigbaren Scheinwerfers gegenüber einem Stoßfänger des Fahrzeuges zu schaffen.

Diese Aufgabe wird erfindungsgemäß durch die Merkmale des Patentanspruchs 1 gelöst.

Nach der Erfindung weist das Gehäuse einen Zentrieransatz auf, der von einer entsprechenden Aussparung des Stoßfängers umgriffen und dabei zentriert wird. Das Gehäuse des Scheinwerfers wird bei der Montage des Stoßfängers automatisch quer zur Abstrahlrichtung zentriert bzw. positioniert.

Der Zentrieransatz ist an einer in vertikaler Richtung oben angeordneten Oberseite in einem an der Scheibe benachbarten Randbereich angeordnet. Der Zentrieransatz weist dabei zwei in einem Abstand gegenüberliegende Führungsflächen auf, die in Abstrahlrichtung des Scheinwerfers konisch aufeinander zulaufend ausgebildet sind. Durch die konisch ausgebildeten Führungsflächen des Zentrieransatzes lässt sich der Zentrieransatz leicht und ohne Mühe gegenüber dem Stoßfänger positionieren. Erfindungsgemäß weist der als Zentriereinsatz zu seinem Gehäuseinnenraum hin eine die Scheibe positionierende Zentriernut auf, in die die Scheibe mit einem Ansatz eingreift. Dadurch, dass die Scheibe ebenfalls in dem Zentrieransatz positioniert bzw. zentriert wird, wird mit der Positionierung über den Stoßfänger sowohl das Scheinwerfergehäuse als auch die Scheibe gegenüber dem Stoßfänge positioniert

Gemäß einer weiteren bevorzugten Ausführungsform der Erfindung, wird die Aussparung des Stoßfängers seitlich von zwei einander in einem Abstand gegenüberliegenden Zentrierstegen begrenzt, die den Fuhrungsftächen des Zentrieransatzes benachbart sind. Die Führungsstege sind in Richtung einer der Scheibe abgewandten Gehäuserückseite hin konisch auseinander laufend ausgebildet.

Durch die konisch auseinander laufenden Führungsstege wird das Ansetzen des Stoßfängers und die Positionierung des Scheinwerfers erleichtert.

Gemäß einer weiteren bevorzugten Ausführungsform der Erfindung weist der Scheinwerfer in einem in vertikaler Richtung unteren Bereich des Gehäuses in mindestens einem unteren Tragelement einen quer zur Abstrahlrichtung verschiebbaren Halter auf, der über eine Schraubenverbindung mit der Karosserie verbindbar ist.
In einem in vertikaler Richtung oberen Bereich des Gehäuses weist der Scheinwerfer mindestens ein oberes Tragelement auf, das über eine Schraubenverbindung mit der Karosserie verbindbar ist.

Durch die Verbindung des Gehäuses über einen verschiebbaren Halter in einem unteren Tragelement mit der Karosserie, kann zur Montage der Scheinwerfer bzw. sein Gehäuse in einem von dem Verkleidungsteil, beispielsweise einem Stoßfänger, abzudeckenden Bereich über eine dort angeordnete Schraubenverbindung fest angezogen werden, während die im oberen Bereich angeordnete Schraubenverbindung erst nach Montage des Stoßfängers angezogen wird.

Weitere Aufgabe der Erfindung ist es, ein Verfahren zu schaffen, das die Positionierung eines in einer Karosserieöffnung eines Fahrzeuges zu befestigenden Scheinwerfers gegenüber einem Verkleidungsteil, beispielsweise einem Stoßfänger, vereinfacht.

Diese Aufgabe wird erfindungsgemäß dadurch gelöst, daß das Gehäuse über mindestens einen in einem unteren Tragelement quer zur Abstrahlrichtung des Scheinwerfers längsverschieblich angeordneten Halter über eine Schraubenverbindung fest mit der Karosserie verbunden wird, und daß das Verkleidungsteil so montiert wird, daß eine einen am Gehäuse angeordneten Zentrieransatz umgreifende Aussparung des Verkleidungsteiles den Scheinwerfer quer zur Abstrahlrichtung zentriert.

Dadurch, daß das Gehäuse des Scheinwerfers quer zur Abstrahlrichtung des Scheinwerfers einen längsverschieblichen Halter aufweist und das Verkleidungsteil so montiert wird, daß seine Aussparung den Scheinwerfer über den am Gehäuse angeordneten Zentrieransatz quer zur Abstrahlrichtung zentriert, wird die Montage und Positionierung eines Verkleidungsteiles erheblich vereinfacht. Der Scheinwerfer kann nunmehr in einem von dem Verkleidungsteil abzudeckenden Bereich fest mit der Karosserie verschraubt und durch Aufsetzen des Verkleidungsteiles positioniert werden, um dann im Anschluß an die Montage des Verkleidungsteiles in einem von dem Verkleidungsteil nicht abgedeckten Bereich verschraubt zu werden.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

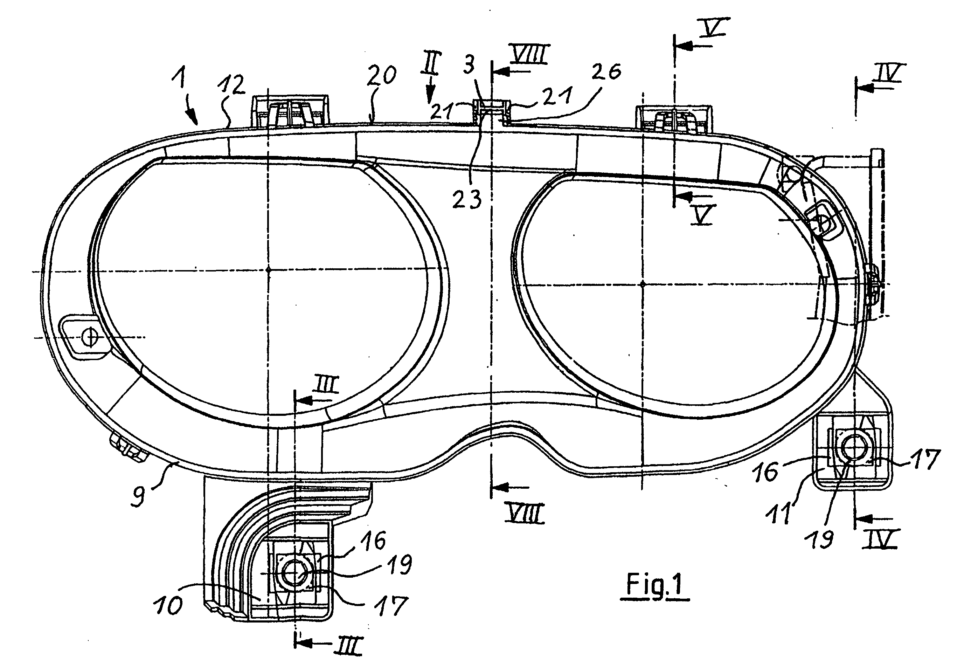

- Figur 1:: Eine Vorderansicht eines Scheinwerfers,

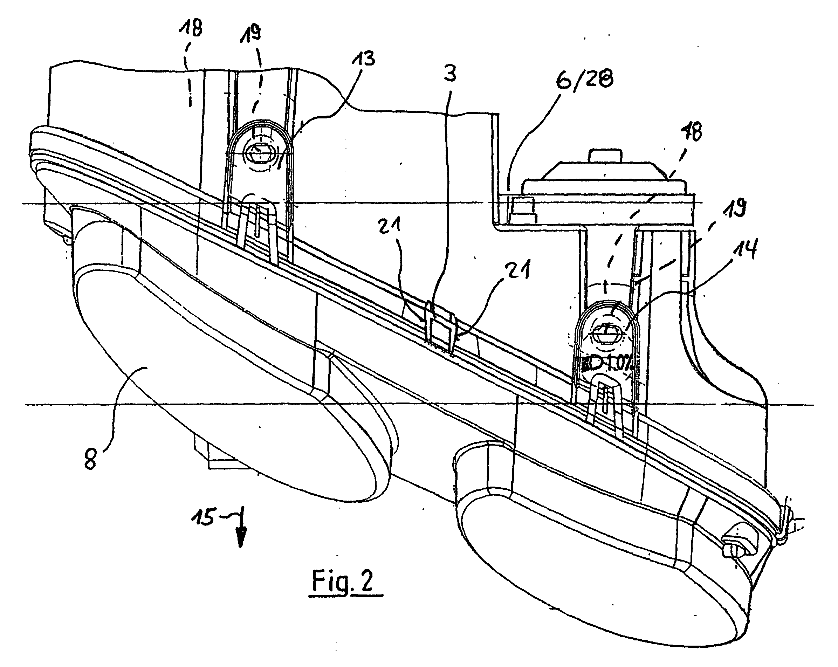

- Figur 2:: eine Draufsicht auf den Scheinwerfer von Figur 1 aus Richtung II,

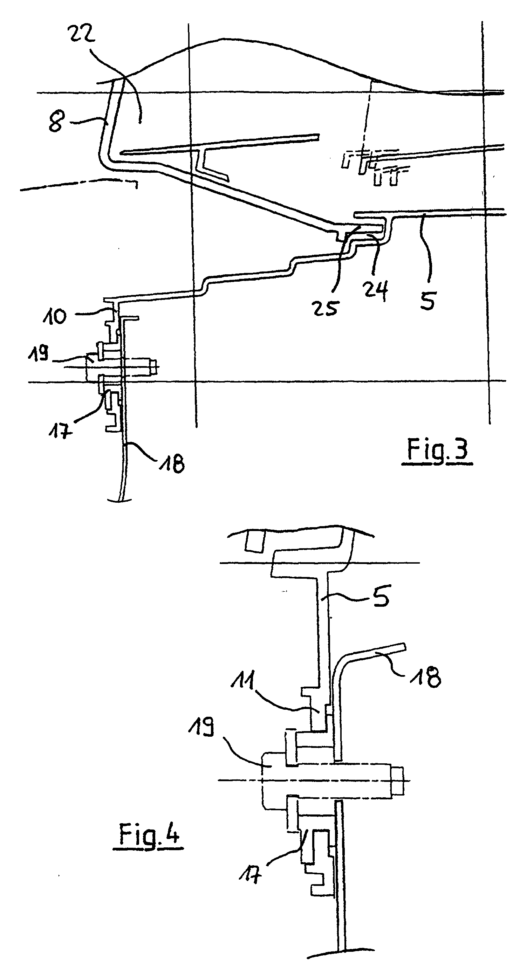

- Figur 3:: eine Seitenansicht des Scheinwerfers von Figur 1 entlang der Linie III - III geschnitten,
- Figur 4:: eine Seitenansicht des Scheinwerfers von Figur 1 entlang der Linie IV - IV geschnitten in vergrößerter Darstellung,

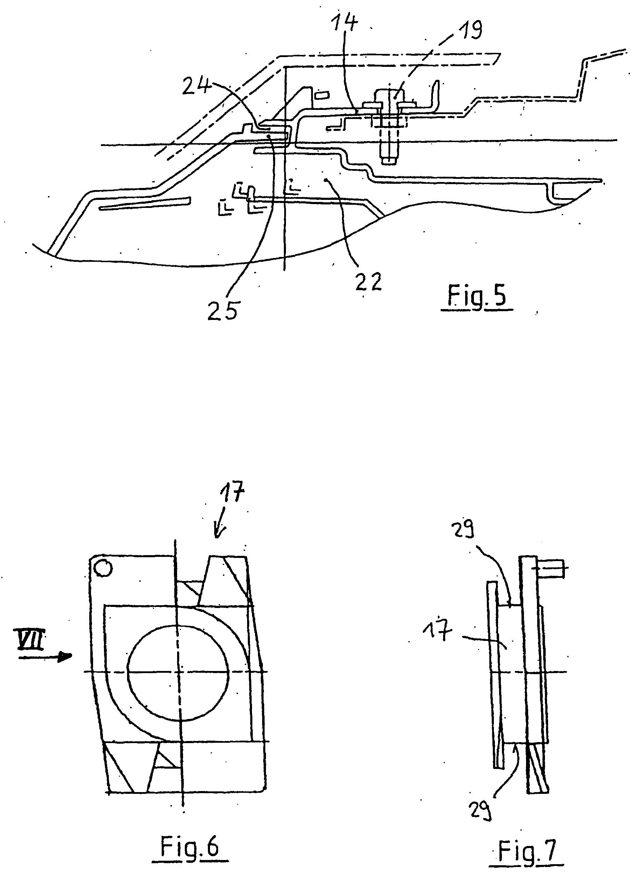

- Figur 5:: eine Seitenansicht des Scheinwerfers von Figur 1 entlang der Linie V - V geschnitten,
- Figur 6:: eine Vorderansicht eines Halters in vergrößerter Darstellung,
- Figur 7:: eine Seitenansicht des Halters von Figur 6 aus Richtung VII,

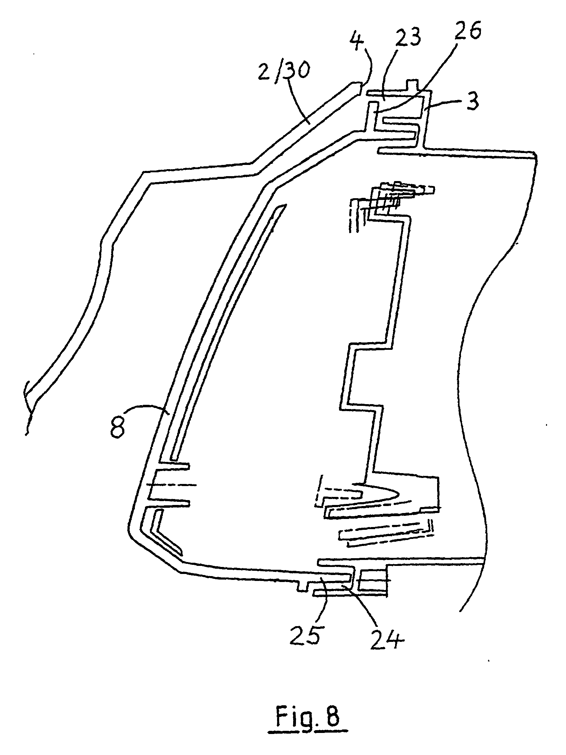

- Figur 8:: eine Seitenansicht des Scheinwerfers von Figur 1 entlang der Linie VIII - VIII geschnitten und

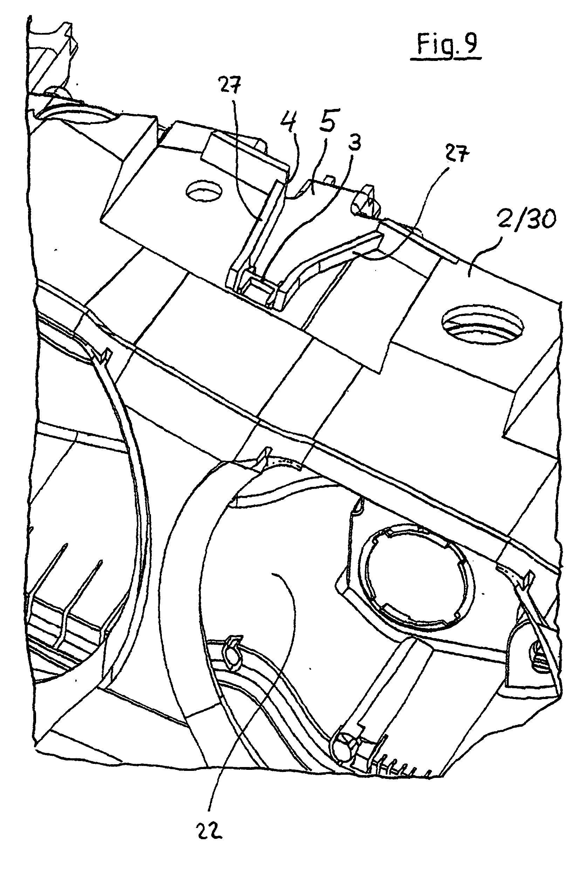

- Figur 9:: eine räumliche Darstellung eines auf ein Gehäuse aufgesetzten Stoßfängers im Ausriß.

Eine Vorrichtung zur Positionierung eines Scheinwerfers (1) gegenüber einem Stoßfänger (2) bzw. einem Verkleidungsteil (30) besteht im wesentlichen aus einem Zentrieransatz (3) und aus einer Aussparung (4).

Der Scheinwerfer (1) weist ein Gehäuse (5) auf, das an einer einer Scheinwerferrückseite (6) abgewandten Gehäusevorderseite (7) von einer Streuscheibe (8) verschlossen wird. Das Gehäuse (5) weist in einem in vertikaler Richtung unteren Bereich (9) ein linkes unteres Tragelement (10) und in einem Abstand dazu ein rechtes unteres Tragelement (11) auf. In einem in vertikaler Richtung oberen Bereich (12) weist das Gehäuse (5) ein linkes oberes Tragelement (13) und in einem Abstand dazu ein rechtes oberes Tragelement (14) auf. In den unteren Tragelementen (10, 11) sind in horizontaler Richtung quer zur Abstrahlrichtung (15) des Scheinwerfers (1), Längsnuten (16) mit längsverschieblichen Haltern (17) angeordnet. Die Halter (17) der unteren Tragelemente (10, 11) sind über Schraubverbindungen (19) mit einer Karosserieöffnung bzw. der Karosserie (18) verbunden. Die oberen Tragelemente (13, 14) sind direkt über Schraubverbindungen (19) mit der Karosserie (18) verbindbar.

Das Gehäuse (5) weist in vertikaler Richtung oben eine Oberseite (20) auf, an der in einem der Streuscheibe (8) benachbarten Randbereich der Zentrieransatz (3) angeordnet ist. Quer zur Abstrahlrichtung (15) ist der Zentrieransatz (3) etwa mittig angeordnet. Der Zentrieransatz (3) weist zwei in einem Abstand einander gegenüberliegende Führungsflächen (21) auf, die in Abstrahlrichtung (15) des Scheinwerfers (1) konisch aufeinanderzulaufend ausgebildet sind.

Der Zentrieransatz (3) weist zu einem Gehäuseinnenraum (22) hin eine die Streuscheibe (8) positionierende Zentriernut (23) auf. An seiner Gehäusevorderseite (7) weist das Gehäuse (5) eine umlaufende Aufnahmenut auf, in die die Streuscheibe (8) mit einem Rand (25) einsetzbar ist. Auf ihrem Rand (25) weist die Streuscheibe einen in radialer Richtung herausragenden Ansatz (26) auf, der in die Zentriemut (23) des Zentrieransatzes (3) einsetzbar ist und dabei die Streuscheibe (8) in horizontaler Richtung quer zur Abstrahlrichtung (15) zentriert.

Die Aussparung (4) ist korrespondierend zu dem Zentrieransatz (3) am Stoßfänger (2) angeordnet. Die Aussparung (4) wird seitlich von zwei in einem Abstand einander gegenüberliegenden Zentrierstegen (27) begrenzt, die den Führungsflächen (21) des Zentrieransatzes (3) benachbart sind. Die Zentrierstege (27) sind in Richtung Scheinwerferrückseite (6) bzw. Gehäuserückseite (28) konisch auseinanderlaufend ausgebildet.

Zur Montage des Scheinwerfers (1) werden die Halter (17) in einer Montagestellung in die Längsnut (16) der unteren Tragelemente (10, 11) eingesetzt und durch eine Drehung um ca. 90° in eine Schiebestellung gebracht, in der die Halter (17) mit ihren einander gegenüberliegen Führungsnuten (29) in den Längsnuten (16) längsverschieblich geführt werden. Der Scheinwerfer (1) wird mit seinem Gehäuse (5) in eine Karosserieöffnung der Karosserie (18) eingesetzt und die Halter (17) über Schraubverbindungen (19) mit der Karosserie (18) fest verbunden. Die oberen Tragelemente (13, 14) werden über Schraubverbindungen (19) nur handfest verschraubt, so daß der Scheinwerfer (1) quer zur Abstrahlrichtung (15) verschiebbar ist. Die Streuscheibe (8) ist so in die Aufnahmenut (24) des Gehäuses (5) eingesetzt, daß ihr Ansatz (26) in die Zentriermut (23) des Zentieransatzes (3) eingreift und die Streuscheibe (8) somit gegenüber dem Zentrieransatz (3) zentriert ist. Der Stoßfänger (2) wird so montiert, daß seine Aussparung (4) mit ihren Zentrierstegen (27) die Führungsflächen (21) des Zentrieransatzes (3) umgreift und so den Scheinwerfer (1) zusammen mit der Streuscheibe (8) gegenüber dem Stoßfänger (2) justiert. Nach erfolgter Montage des Stoßfängers (2) können auch die Schraubverbindungen (19) der oberen Tragelemente (13, 14) fest angezogen werden.

## Patentansprüche

1. Vorrichtung zur Positionierung eines mit seinem Gehäuse (5) in einer Karosserieöffnung eines Fahrzeuges zu befestigenden Scheinwerfers (1) gegenüber einer Verkleidung des Fahrzeuges, wobei das Gehäuse (5) einen Zentrieransatz (3) aufweist, der von einer Aussparung des Fahrzeugs zentrierend umgreifbar ist, **dadurch gekennzeichnet, dass** der Zentrieransatz (3) an einer in vertikaler Richtung oben angeordneten Oberseite (20) in einem einer Scheibe (8) benachbarten Randbereich angeordnet ist, wobei der Zentrieransatz (3) zur Positionierung des Gehäuses (5) gegenüber dem Stoßfänger (2) zwei in einem Abstand gegenüberliegende Führungsflächen (21) aufweist, die in Abstrahlrichtung (15) des Scheinwerfers (1) konisch aufeinander zulaufend ausgebildet sind und dass der Zentrieransatz (3) zur Positionierung der Scheibe (8) gegenüber dem Stoßfänger (2) zu einem Gehäuseinnenraum (22) hin eine die Scheibe (8) positionierende Zentriernut (23) aufweist, in die die Scheibe (8) mit einem Ansatz (26) eingreift und dabei die Scheibe (8) in horizontaler Richtung quer zur Abstrahlrichtung (15) zentriert.

2. Vörrichtung nach Anspruch 1, **dadurch gekennzeichnet, dass** die Aussparung (4) seitlich von zwei in einem Abstand einander gegenüberliegenden Zentrierstangen (27) begrenzt wird, die den Führungsflächen (21) des Zentrieransatzes (3) benachbart sind.

3. Vorrichtung nach Anspruch 1 oder 2, **dadurch gekennzeichnet, dass** die Zentrierstege (27) in Richtung einer der Scheibe (8) abgewandten Gehäuserückseite (28) hin konisch auseinander laufend ausgebildet sind.

4. Vorrichtung nach einem der Ansprüche 1 bis 3, **dadurch gekennzeichnet, dass** der Scheinwerfer (1) in einem in vertikaler Richtung unteren Bereich (9) des Gehäuses (5) in mindestens einem unteren Tragelement (10, 11) einen quer zu Abstrahlrichtung (15) verschiebbaren Halter (17) aufweist, der über eine Schraubenverbindung (19) mit der Karosserie (18) verbindbar ist.

5. Vorrichtung nach Anspruch 4, **dadurch gekennzeichnet, dass** der Scheinwerfer (1) in einem in vertikaler Richtung oberen Bereich (12) des Gehäuses (5) mindestens ein oberes Tragelement (13, 14) aufweist, das über eine Schraubenverbindung (19) mit der Karosserie (18) verbindbar ist

6. Verfahren zur Positionierung eines in einer Karosserieöffnung eines Fahrzeuges zu befestigenden Scheinwerfers gegenüber einem Verkteidungstett. beispielsweise einem Stoßfänger, **dadurch gekennzeichnet, dass** das Gehäuse (5) über mindestens einen in einem unteren Tragelement (10, 11) quer zur Abstrahlrichtung (15) des Scheinwerfers (1) längsverschieblich angeordneten Halter (17) über ein Schraubenverbindung (19) fest mit der Karosserie (18) verbunden wird und dass das Verkleidungsteil (30) so montiert wird, dass eine einem am Gehäuse (5) angeordneten Zentrieransatz (3) umgreifende Aussparung (4) des Verkleidungsteiles (30) den Scheinwerfer (1) quer zur Abstrahlrichtung (15) zentriert.

7. Verfahren nach Anspruch 6, **dadurch gekennzeichnet, dass** eine das Gehäuse verschließende Scheibe (8) mit einem Ansatz (26) so in eine Zentriernut (23) des Zentrieransatzes (3) eingesetzt und zentriert wird, dass durch die Montage des Verkleidungsteiles (30) die Scheibe (8) zusammen mit dem Gehäuse (5) gegenüber dem Verkleidungsteil (30) zentriert wird.

## Claims

1. Device for positioning a headlamp (1) to be secured with a housing (5) in a body opening of a vehicle relative to a facing of the vehicle, wherein the housing (5) exhibits a centring attachment (3) which can be surrounded centrally by a recess of the vehicle, **characterised in that** the centring attachment (3) is arranged on an upper side (20) arranged at the top in the vertical direction in a peripheral region adjacent to a disc (8), wherein the centring attachment (3) exhibits two guide faces (21) opposing each other at a certain distance for positioning the housing (5) relative to the bumper (2), which faces are designed so that taper toward each other in the direction of radiation (15) of the headlamp (1), and **in that** the centring attachment (3) exhibits a centring groove (23) positioning the disc (8) in the direction of the inside (22) of the housing, in which groove the disc (8) engages with an attachment (26), and exhibits a centring groove (23) positioning the disc (8) in the direction if the inside (23) of the housing to position the disc (8) relative to the bumper (2), in which groove the disc (8) engages with an attachment (26), wherein the disc (8) centres in the horizontal direction transversely to the direction of radiation (15).

2. Device according to Claim 1, **characterised in that** the recess (4) is limited laterally by two centring rods (27) opposing each other at a certain distance, which rods are adjacent to the guide faces (21) of the centring attachment (3).

3. Device according to Claim 1 or 2, **characterised in that** the centring plates (27) are designed so that they taper toward each other in the direction of back of the housing (28) facing away from the disc (8).

4. Device according to one of Claims 1 to 3, **characterised in that** the headlamp (1) exhibits a support (17) that can be displaced transversely to the direction of radiation (15) in a lower region (9) of the housing) in the vertical direction in at least one lower supporting element (10, 11), which support can be connected by a screw connection (19) to the body (18).

5. Device according to Claim 4, **characterised in that** the headlamp (1) exhibits at least one upper supporting element (13, 14) in an upper area (12) of the housing (5) in the vertical direction, which element can be connected by a screw connection (19) to the body (18).

6. Method for positioning a headlamp to be secured in a body opening of a vehicle relative to a facing element, for example a bumper, **characterised in that** the housing (5) is connected securely the body (18) by at least one support (17), arranged so that it can be longitudinally displaced in a lower supporting element (10, 11) transversely to the direction of radiation (15) Of the headlamp (1), and **in that** the facing element (30) is fitted so that a recess (4) of the facing element (30) surrounding a centring attachment (3) arranged on the housing (5) centres the headlamp (1) transversely to the direction of radiation (15).

7. Method according to Claim 6, **characterised in that** a disc (8), with an attachment (26), is inserted and centred in a centring groove (23) of the centring attachment (3) so that the disc (8) together with the housing (5) is centred relative to the facing element (30) by the fitting of that element (30).

## Revendications

1. Dispositif de positionnement d'un phare (1) à fixer avec son boîtier (5) dans une ouverture de carrosserie d'un véhicule par rapport à une garniture du véhicule, le boîtier (5) présentant un talon de centrage (3) qui peut être entouré par un évidement du véhicule pour réaliser un centrage, **caractérisé en ce que** le talon de centrage (3) est agencé sur une face supérieure (20) agencée en haut, en direction verticale, dans une région de bord voisine d'une plaque (8), et pour positionner le boîtier (5) par rapport au pare-chocs (2), le talon de centrage (3) présente deux surfaces de guidage (21) qui sont opposées à distance l'une de l'autre et réalisées en convergeant l'une vers l'autre en forme de cône en direction de rayonnement (15) du phare (1), et **en ce que** pour positionner la plaque (8) par rapport au pare-chocs (2), le talon de centrage (3) présente vers un espace intérieur de boîtier (22) une gorge de centrage (23) positionnant la plaque (8), dans laquelle la plaque (8) s'engage avec un talon (26), et qui centre alors la plaque (8) en direction horizontale transversalement à la direction de rayonnement (15).

2. Dispositif selon la revendication 1, **caractérisé en ce que** l'évidement (4) est limité latéralement par deux baguettes de centrage (27) qui sont opposées à distance l'une de l'autre et qui sont voisines des surfaces de guidage (21) du talon de centrage (3).

3. Dispositif selon l'une ou l'autre des revendications 1 et 2, **caractérisé en ce que** les baguettes de centrage (27) sont réalisées en divergeant l'une par rapport à l'autre en forme de cône en direction d'une face postérieure de boîtier (28) détournée de la plaque (8).

4. Dispositif selon l'une des revendications 1 à 3, **caractérisé en ce que** le phare (1) présente, dans une région inférieure (9) en direction verticale du boîtier (5) et dans au moins un élément porteur inférieur (10, 11), un support (17) déplaçable transversalement à la direction de rayonnement (15), lequel peut être relié à la carrosserie par une liaison vissée (19).

5. Dispositif selon la revendication 4, **caractérisé en ce que** le phare (1) présente, dans une région supérieure (12), en direction verticale du boîtier (5), au moins un élément porteur supérieur (13, 14) qui peut être relié à la carrosserie (18) par une liaison vissée (19).

6. Procédé de positionnement d'un phare à fixer dans une ouverture de carrosserie d'un véhicule par rapport à un élément de garniture, par exemple un pare-chocs, **caractérisé en ce que** le boîtier (5) est relié solidaire de la carrosserie (18) au moyen d'une liaison vissée (19) par au moins un support (17) agencé dans un élément porteur inférieur (10, 11) avec possibilité de déplacement longitudinal transversalement à la direction de rayonnement (15) du phare (1), et **en ce que** l'élément de garniture (30) est monté de telle sorte qu'un évidement (4) de l'élément de garniture (30), qui entoure un talon de centrage (3) agencé sur le boîtier (4), centre le phare (1) transversalement à la direction de rayonnement (15).

7. Procédé selon la revendication 6, **caractérisé en ce qu'**une plaque (8) fermant le boîtier est insérée avec un talon (26) dans une gorge de centrage (23) du talon de centrage (3) et centrée de telle sorte que, par le montage de l'élément de garniture (30), la plaque (8) est centrée conjointement avec le boîtier (5) par rapport à l'élément de garniture (30).
